# DEMANDE DE BREVET EUROPEEN

(11) **EP 1 524 292 A1**
(43) Date de publication de la demande: **20.04.2005**
(21) Numéro de dépôt: 04300597.4
(22) Date de dépôt: 14.09.2004
(51) Int. Cl.: C08K 5/3492

(54) **Procédé de réticulation d'un polymère greffé silane**

(30) Priorité: 09.10.2003 FR 0311806
(71) Demandeur: Nexans, 75008 Paris (FR)
(72) Inventeur: Kensicher, Christèle, 69007 Lyon (FR)
(74) Mandataire: Feray, Valérie

(57) **Abrégé**

La présente invention concerne un procédé de réticulation d'un polymère greffé silane en présence d'eau et d'un catalyseur de condensation.

L'invention est remarquable en ce que le catalyseur de condensation est constitué d'une amine encombrée dont le poids moléculaire est supérieur à 2000g/mol.

## Description

La présente invention concerne un procédé permettant de faire réticuler un polymère greffé silane, c'est-à-dire un polymère sur lequel a été préalablement greffé un silane.

L'invention trouve une application particulièrement avantageuse, mais non exclusive, dans le domaine des câbles d'énergie et/ou de télécommunication, y compris les câbles à fibres optiques.

La fabrication des gaines isolantes et/ou de protection de tels câbles s'effectue généralement par réticulation silane de compositions à base de polymères contenant des diènes. On sait en effet que la constitution d'un réseau de liaisons chimiques s'étendant suivant les différentes directions de l'espace, est de nature à augmenter la tenue à la température du polymère ainsi réticulé.

Quoi qu'il en soit, la réticulation silane est aujourd'hui un procédé parfaitement connu qui consiste schématiquement à greffer un polymère avec un silane par addition radicalaire à l'aide d'un peroxyde, avant de réticuler le tout en présence d'eau et d'un catalyseur de condensation. En ce qui concerne plus particulièrement la seconde étape de ce procédé, il est connu d'utiliser du dibutyle laurate d'étain pour catalyser la réticulation du polymère greffé.

Ce type de catalyseur de condensation, communément appelé DBTL, présente toutefois l'inconvénient d'être à base de sel d'étain, c'est-à-dire un composé connu pour être particulièrement nocif, voir même dangereux pour l'environnement. Dans certains pays, il est même déjà envisagé d'interdire l'emploi du DBTL à plus ou moins court terme, excluant par conséquent l'utilisation de la pourtant très performante technique silane pour réticuler des polymères contenant des diènes.

Aussi le problème technique à résoudre, par l'objet de la présente invention, est de proposer un procédé de réticulation d'un polymère greffé silane en présence d'eau et d'un catalyseur de condensation, procédé qui permettrait d'éviter les problèmes de l'état de la technique en étant sensiblement plus écologique.

La solution au problème technique posé consiste, selon la présente invention, en ce que le catalyseur de condensation est constitué d'une amine encombrée dont le poids moléculaire est supérieur à 2000g/mol.

Le fait que l'amine soit encombrée signifie plus précisément que la fonction amine est stériquement encombrée par au moins une autre portion de la molécule constituant ce composé. Lors de la catalyse, cette caractéristique permet avantageusement de former des complexes non stables qui sont susceptibles de faciliter la création des ponts siloxanes, c'est-à-dire des traditionnelles liaisons Si-O-Si de la réticulation silane.

Par ailleurs, il est à noter que le terme polymère doit se comprendre au sens large, c'est-à-dire qu'il englobe aussi bien les polymères purs que les copolymères, ou un mélange quelconque de ce type de composés.

L'invention telle qu'ainsi définie présente l'avantage de pouvoir utiliser la technique de réticulation silane, tout en se dispensant de sels d'étain.

De préférence, l'amine encombrée constituant le catalyseur de condensation est une amine secondaire. Par rapport à une amine primaire, une amine secondaire présente en effet l'avantage d'être intrinsèquement encore plus encombrée, d'où une optimisation de l'efficacité en tant que catalyseur.

Selon un mode de réalisation actuellement préféré de l'invention, le catalyseur de condensation est constitué de poly[6-[(1,1,3,3-tétraméthylbutyl)amino]-1,3,5-triazine-2,4-diyl]-[(2,2,6,6-tétraméthyl-4-pipéridyl)imino]-hexaméthylène-[(2,2,6,6-tétraméthyl-4-pipéridyl)imino].

Ce type de composé est commercialisé notamment par la société Ciba sous la marque Chimassorb 944, mais il peut également se présenter par exemple sous la marque Lowilite 94 de la société Great Lakes. Sa formule est la suivante:

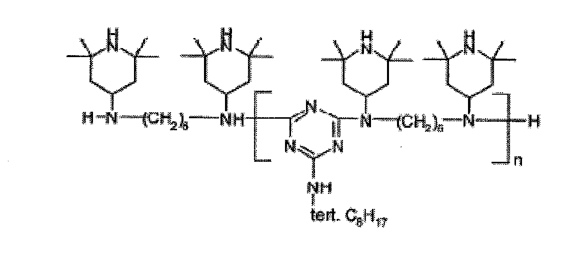

Il est à noter que le chimassorb 944 est à l'origine un produit qui est habituellement employé pour protéger les polymères de la lumière, et notamment des ultraviolets. Son utilisation en tant que catalyseur de condensation s'avère de ce fait non évidente, ce qui révèle le caractère particulièrement inventif de la présente invention.

Selon un premier mode de réalisation de l'invention, le polymère greffé est à base d'une polyoléfine, tel que le polyéthylène (PE) par exemple.

Conformément à un second mode de réalisation de l'invention, le polymère greffé est à base d'éthylène vinyle acétate.

Suivant un troisième mode de réalisation de l'invention, le polymère greffé est à base d'EPDM.

Selon une particularité de l'invention, le procédé de réticulation est mis en oeuvre en milieu aqueux. Dans la pratique, la réticulation est classiquement réalisée en piscine, pendant une durée de l'ordre de 24 heures et avec une eau à environ 63°C.

Mais conformément à une variante de réalisation sensiblement équivalente, le procédé de réticulation peut être mis en oeuvre en atmosphère humide. Concrètement, l'opération s'effectue cette fois en sauna avec de l'eau pulvérisé à une température de l'ordre de 63°C, et pendant environ 24 heures.

Selon une autre particularité de l'invention, le procédé de réticulation est mis en oeuvre en milieu basique ou neutre. Le fait que réticulation n'ait pas lieu en milieu acide permet avantageusement de ne pas désactiver les amines présentes.

Bien entendu le procédé de réticulation précédemment décrit est applicable à tout polymère greffé silane, quelle que soit son origine, c'est-à-dire quelle que soit la manière selon laquelle il a été obtenu.

Mais de façon particulièrement avantageuse, l'invention concerne plus généralement un procédé de réticulation silane d'un polymère contenant des diènes, consistant à greffer le polymère avec un silane par addition radicalaire à l'aide d'un peroxyde, et à réticuler le polymère greffé silane en présence d'eau et d'un catalyseur de condensation. Ce procédé de réticulation silane est remarquable en ce que la réticulation du polymère greffé est réalisée suivant un procédé de réticulation tel que précédemment décrit.

Selon un mode de réalisation actuellement préféré, le procédé de réticulation silane est mis en oeuvre smivant la technique sioplas qui consiste schématiquement à procéder successivement au greffage du polymère, puis à la réticulation du polymère greffé, en intercalant éventuellement une étape intermédiaire consistant à ajouter au polymère greffé au moins une charge, par exemple ignifugeante.

Mais selon une variante sensiblement équivalente de ce mode de réalisation préféré, le procédé de réticulation silane est susceptible d'être mis en oeuvre suivant la technique monosil qui consiste, de manière schématique, à procéder simultanément au greffage du polymère et à la réticulation du polymère ainsi greffé.

Les techniques sioplas et monosil étant parfaitement connues, elles ne seront pas décrit davantage ici.

L'invention concerne également tout câble comportant au moins un élément conducteur s'étendant à l'intérieur d'au moins un élément isolant, dans lequel au moins un élément isolant est composé d'un polymère réticulé par un procédé de réticulation silane tel que précédemment décrit.

Il est à noter que la notion d'élément isolant concerne également toute gaine dont la fonction première n'est pas d'isoler électriquement l'élément conducteur, mais avant tout de protéger le ou les gaines isolantes ; étant entendu que dans le domaine câbles d'énergie et/ou de télécommunication, les matériaux composants les gaines de protection ont généralement des propriétés électriquement isolantes.

D'autres caractéristiques et avantages de la présente invention apparaîtront au cours de la description de l'exemple qui va suivre et qui est donné à titre illustratif et nullement limitatif.

L'exemple en question concerne un compound qui est destiné à constituer, après réticulation, une couche isolante d'un câble d'énergie ou de télécommunication. La finalité de cet exemple est plus particulièrement de permettre la comparaison des propriétés des matériaux réticulés respectivement, en présence de DBTL et en présence d'un catalyseur de condensation conforme à l'invention.

Il est à noter que dans l'ensemble de ce document, les quantités sont classiquement exprimées en pcr, c'est-à-dire en parties en poids pour cent parties de résine.

Le tableau 1 détaille les proportions des différents constituants du compound devant être réticulé.

**Tableau 1**

| | |
|---|---|
| Greffé | 100 pcr |
| Charge ignifugeante | 160 à 180 pcr |
| Agents de mise en oeuvre et antioxydants | 4 à 7 pcr |

On précise que le polymère greffé silane, appelé ici greffé, résulte plus précisément de l'association de 100 pcr d'EVA et de 1,5 pcr d'un mélange de silane et de peroxyde.

Conformément au tableau 2, deux compositions à base de ce compound sont alors préparées en vue d'être réticulées séparément suivant le même procédé silane. Ce dernier ne sera pas décrit davantage ici en raison du fait qu'il est parfaitement classique et donc connu.

**Tableau 2**

| | Composition 1 | Composition 2 |
|---|---|---|
| Compound (pcr) | 100 | 100 |
| Mélange maître à base de Chimassorb 944 (pcr) | 0,9 | 0 |
| Mélange maître à base de DBTL (pcr) | 0 | 2 |
| Total (pcr) | 100,9 | 102 |

On remarque que chaque catalyseur est conditionné sous forme d'un mélange maître afin d'éviter d'avoir à manipuler de trop petites quantités. Le mélange maître à base de Chimassorb 944 contient en fait 50% de ce composé, tandis que le mélange maître à base de DBTL résulte de la combinaison de 100 pcr de polymère à base de PE et d'EVA avec 0,36 pcr de DBTL.

Les compositions 1 et 2 sont ensuite réticulées isolément l'une de l'autre en présence d'eau, préférentiellement en piscine pendant 24 heures et à 63°C. Des échantillons 1 et 2, se présentant sous forme d'éprouvettes, sont alors prélevés de chaque matériau ainsi réticulé ; les échantillons 1 et 2 résultant bien évidemment de la réticulation des compositions respectivement 1 et 2.

Une série de test est mené pour pouvoir déterminer l'efficacité du Chimassorb 944 en tant que catalyseur de condensation, et notamment par rapport au DBTL.

Le tableau 3 résume les principales propriétés mécaniques des deux types d'échantillons, à savoir la résistance à la rupture, l'allongement à la rupture et le module à 50% d'allongement.

**Tableau 3**

| | Echantillon 1 | Echantillon 2 |
|---|---|---|
| Résistance à la rupture (MPa) | 9.6 | 11 |
| Allongement à la rupture (%) | 219 | 190 |
| Module à 50% d'allongement (MPa) | 6.5 | 7 |

Les différences observables ne sont en fait pas significatives, de sorte que les propriétés mécaniques des deux échantillons 1 et 2 doivent être considérées comme comparables.

le tableau 4 s'intéresse aux capacités de vieillissement thermique des deux types échantillons. Il regroupe à cet égard les valeurs de différence de résistance à la rupture et de différence d'allongement à la rupture, qui sont déterminées à l'issue d'un passage dans une étuve à air pendant 240 heures à 120°C.

**Tableau 4**

| | Echantillon 1 | Echantillon 2 |
|---|---|---|
| Différence de résistance à la rupture (%) | 7 | 17 |
| Différence d'allongement à la rupture (%) | -18 | -13 |

On observe ici une amélioration de la tenue à la chaleur pour l'échantillon 1, c'est-à-dire pour le matériau réticulé en présence de Chimassorb 944.

Le tableau 5 concerne la tenue aux acides des deux types échantillons. Ce test est réalisé par simple trempe dans de l'acide chlorhydrique pendant 28 jours à 23°C. On détermine alors classiquement la différence de résistance à la rupture et la différence d'allongement à la rupture pour chaque échantillon 1 et 2.

**Tableau 4**

| | Echantillon 1 | Echantillon 2 |
|---|---|---|
| Différence de résistance à la rupture (%) | -20 | -28 |
| Différence d'allongement à la rupture (%) | 7 | 2 |

Les valeurs mesurées sont sensiblement comparables, de sorte que l'on peut considérer que les échantillons 1 et 2 présentent les mêmes capacités de tenue aux acides.

Le tableau 6 s'intéresse quant à lui à la tenue aux bases des deux types échantillons. Ce test est là aussi réalisé par simple trempe pendant 28 jours à 23°C, mais cette fois dans un bain de soude. On détermine là encore la différence de résistance à la rupture et la différence d'allongement à la rupture pour chaque échantillon 1 et 2.

**Tableau 6**

| | Echantillon 1 | Echantillon 2 |
|---|---|---|
| Différence de résistance à la rupture | -2 | 3 |
| Différence d'allongement à la rupture | 3 | 5 |

A nouveau, les valeurs mesurées sont relativement comparables, de sorte que l'on peut considérer que les échantillons 1 et 2 présentent les mêmes capacités de tenue aux bases.

L'ensemble de ces résultats permet de conclure que le Chimassorb 944 est bien en mesure de catalyser la réticulation d'un polymère greffé silane, en l'occurrence le greffé de notre exemple. De plus, son utilisation en tant que catalyseur de condensation, confère au matériau réticulé des propriétés sensiblement identiques que celles obtenues avec son homologue, le DBTL. Par conséquent, et de manière particulièrement avantageuse, le catalyseur de condensation selon l'invention constitue bien une alternative aux catalyseurs à base de sel d'étain.

## Revendications

1. Procédé de réticulation d'un polymère greffé silane en présence d'eau et d'un catalyseur de condensation, **caractérisé en ce que** le catalyseur de condensation est constitué d'une amine encombrée dont le poids moléculaire est supérieur à 2000g/mol.

2. Procédé de réticulation selon la revendication 1, **caractérisé en ce que** l'amine encombrée est une amine secondaire.

3. Procédé de réticulation selon l'une des revendications 1 ou 2, **caractérisé en ce que** le catalyseur de condensation est constitué de poly[6-[(1,1,3,3-tétraméthylbutyl)amino]-1,3,5-triazine-2,4-diyl]-[(2,2,6,6-tétraméthyl-4-pipéridyl)imino]-hexaméthylène-[(2,2,6,6-tétraméthyl-4-pipéridyl)imino].

4. Procédé de réticulation selon l'une quelconque des revendications 1 à 3, **caractérisé en ce que** le polymère greffé est à base d'une polyoléfine.

5. Procédé de réticulation selon l'une quelconque des revendications 1 à 4, **caractérisé en ce que** le polymère greffé est à base d'éthylène vinyle acétate.

6. Procédé de réticulation selon l'une quelconque des revendications 1 à 5, **caractérisé en ce que** le polymère greffé est à base d'EPDM.

7. Procédé de réticulation selon l'une quelconque des revendications 1 à 6, **caractérisé en ce qu'**il est mis en oeuvre en milieu aqueux, à une température de l'ordre de 63°C pendant environ 24 heures.

8. Procédé de réticulation selon l'une quelconque des revendications 1 à 6, **caractérisé en ce que** il est mis en oeuvre en atmosphère humide, à une température de l'ordre de 63°C pendant environ 24 heures.

9. Procédé de réticulation selon l'une quelconque des revendications 1 à 8, **caractérisé en ce qu'**il est mis en oeuvre en milieu basique ou neutre.

10. Procédé de réticulation silane d'un polymère contenant des diènes, consistant à greffer le polymère avec un silane par addition radicalaire à l'aide d'un peroxyde, et à réticuler le polymère greffé silane en présence d'eau et d'un catalyseur de condensation, **caractérisé en ce que** la réticulation du polymère greffé silane est réalisée suivant un procédé de réticulation conforme à l'une quelconque des revendications précédentes.

11. Procédé de réticulation silane selon la revendication 10, **caractérisé en ce qu'**il est mis en oeuvre suivant la technique sioplas.

12. Procédé de réticulation silane selon la revendication 10, **caractérisé en ce qu'**il est mis en oeuvre suivant la technique monosil.

13. Câble comportant au moins un élément conducteur s'étendant à l'intérieur d'au moins un élément isolant, **caractérisé en ce qu'**au moins un élément isolant est composé d'un polymère réticulé suivant le procédé de réticulation silane conforme à l'une quelconque des revendications 10 à 12.
